# EUROPEAN PATENT SPECIFICATION

(11) **EP 2 555 975 B1**
(45) Date of publication and mention of the grant of the patent: **26.03.2014**
(21) Application number: 11717775.8
(22) Date of filing: 06.04.2011
(51) Int. Cl.: B64C 21/06, B64C 31/02, B64D 13/00, B60H 1/24

(54) **AIR EXTRACTOR FROM A COCKPIT OF A CRAFT**
LUFTEXTRAKTOR AUS EINEM COCKPIT EINES FLUGZEUGES
VENTILATEUR D'EXTRACTION D'AIR D'UN POSTE DE PILOTAGE D'AÉRONEF

(30) Priority: 06.04.2010 ZA 201002389
(43) Date of publication of application: 13.02.2013
(73) Proprietor: North-West University, 2531 Potchefstroom (ZA)
(72) Inventor: JONKER, Adrianus, Stefanus, 2531 Potchefstroom (ZA); BOSMAN, Johannes, Jacobus, 2531 Potchefstroom (ZA)
(74) Representative: Hopkin, Tobias J.B.
(86) International application number: PCT/IB2011/051477
(87) International publication number: WO 2011/125030

(56) References cited:
- DE-A1-102008 034 045
- DE-U- 1 841 282
- GB-A- 490 623
- GB-A- 503 799
- GB-A- 571 329
- GB-A- 894 093
- US-A- 2 111 530
- US-A- 2 650 781

## Description

This invention relates to a craft comprising a cockpit or the like, and an associated method of extracting air from a cockpit of a craft.

Ventilation of a cockpit of light aircraft is important to cool the cockpit area. Ventilation air normally enters the cockpit at the front and is expelled from the aircraft into a free stream at the rear of the aircraft.
The point where the ventilation air is expelled into the free stream is important and can increase the drag of the aircraft unnecessarily. This is even more important for gliders, because with gliders, every little bit of drag must be avoided, in order to achieve high performance. Further, if a canopy for the cockpit does not fit perfectly, a positive cockpit pressure relative to general ambient pressure causes air to leak out from the cockpit at the cockpit-canopy junction. This affects the airflow around the fuselage and onto the wing negatively, even resulting in flow separation with its associated drag increase.

DE 10 2008 034045 A1 discloses a glider that has a body in which a cockpit closable with a hood is arranged. Air is introducable into an interior in the hood. The interior of the cockpit is connected with an outer area by a discharge opening that is arranged in the shell of the glider. The discharge opening is formed as an air scoop that extends into the interior. The discharge opening is arranged in a tapering region of the body. The discharge opening is arranged at a reduced distance to a chassis box arranged in the body.

Accordingly, it is an aim of the present invention to provide a craft, and a method of extracting air from a cockpit of a craft with which the applicant believes the aforementioned disadvantages may at least be alleviated or which may provide a useful alternative for known vents, crafts and methods of venting the cockpit of a craft.

According to the invention, there is provided a craft and a method of extracting air from a cockpit of a craft, as defined in the independent claims.

A craft may be in the form of a glider.

The glider may comprise an elongate fuselage and a lift providing wing comprising a first wing part on one side of the fuselage and a second wing part on an opposite side of the fuselage and the extractor may be mounted in an upper region of the fuselage, between the first and second wing parts.

The passage may be trumpet shaped with the inlet in a region thereof having a larger cross sectional area and the passage may converge towards a throat region between the inlet and the outlet.

The flow conditioning arrangement may be provided downstream of the throat.

The flow conditioning arrangement may comprise at least one deflector element, preferably comprising an aerofoil-shaped body having a head and a tail. In embodiments wherein more than one element are provided, the elements may be mounted parallel to one another, for example in louver fashion.

An angle of the at least one element relative to a main axis of the passage may be adjustable, manually or automatically.

A craft may comprise ducting leading from the cockpit to holes in regions of the body of the craft, in use, to apply boundary layer suction to the regions. Such regions may include, but is not limited to a nose of the fuselage and regions on the main wing of the craft.

The method may comprise the step of causing an airstream moving from the cockpit to join a free airstream adjacent the craft body, substantially tangentially.

The airstream moving from the cockpit may be caused to join the free airstream substantially tangentially, by deflecting the airstream moving from the cockpit towards an external surface of the craft body.

The method may include the step of utilizing the negative pressure in the cockpit to apply boundary layer suction to any part of the body of the craft.

The invention will now further be described, by way of example only, with reference to the accompanying diagrams wherein:
- figure 1: is an isometric view of a craft in the form of a glider comprising an extractor for air from a cockpit of the craft; figure 2 a diagrammatic perspective view of the extractor;
- figure 3: is a section on line III in figure 2;
- figure 4: is a diagram illustrating airflow through and past the extractor; and
- figure 5: is a diagrammatic sideview of the craft showing holes for applying boundary layer suction to regions of the body of the craft.

As an example embodiment, a craft in the form of a glider is generally designated by the reference numeral 10 in the diagrams.

The craft 10 comprises a body 1 2 comprising a fuselage 1 4 and a main or lift providing wing 1 6. The wing comprises a first part 1 6.1 on one side of the fuselage and a second part 1 6.2 on the opposite side of the fuselage. The fuselage comprises a cockpit 18 towards a front end thereof and a canopy 20 for the cockpit.

An extractor 22 for extracting air from the cockpit is mounted in a region 23 of low pressure during use, in the form of flight, of the craft. In the example embodiment shown, the region is in an upper region of the fuselage between the wing parts 1 6.1 and 16.2.

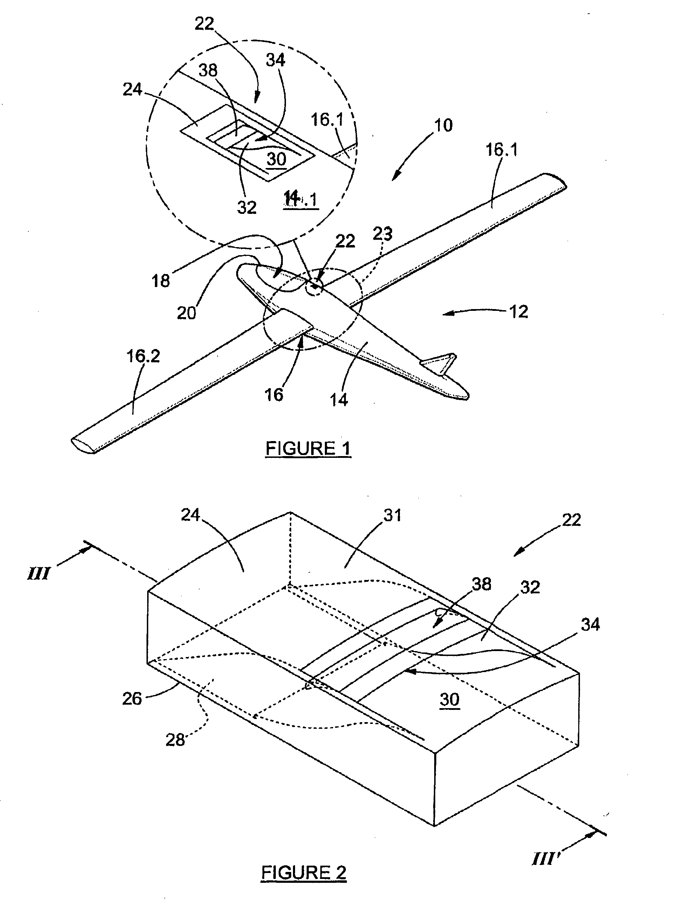

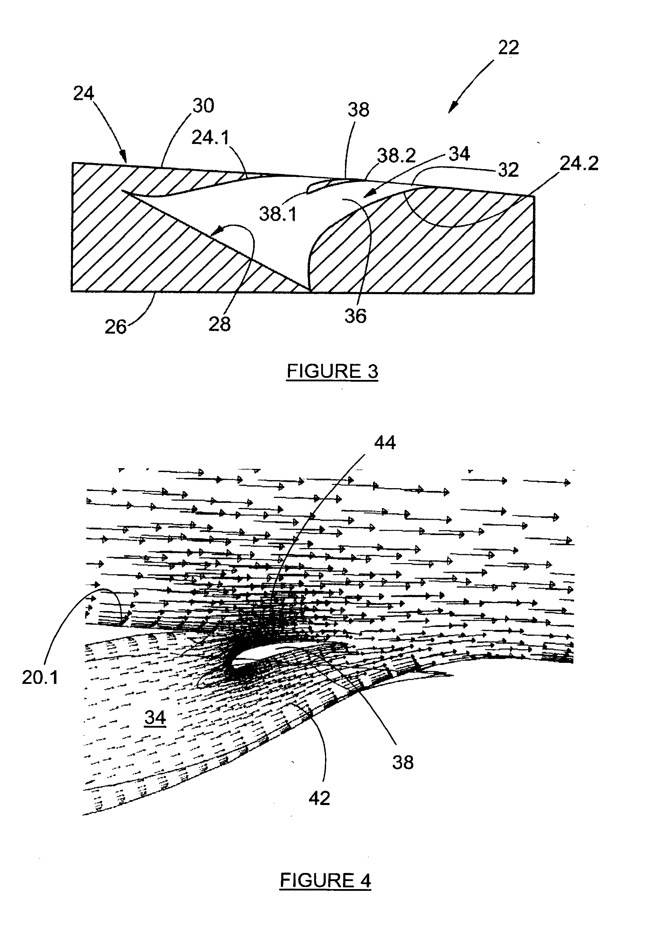

Referring to figures 2 and 3, the extractor comprises a body 24 having an upper surface 30. The body 24 defines an inlet 28 and an outlet 32 in the upper surface. An airflow passage 34 extends between the inlet 28 and the outlet 32. As best shown in figure 3, the passage 34 is trumpet shaped in that the inlet 28 is provided in a region thereof with a larger cross sectional area and narrows towards a throat 36 (shown in figure 3) between the inlet 28 and outlet 32. The inlet 28 is in airflow communication with the cockpit 1 8. A front passage defining region 24.1 of the body adjacent the outlet 32 converges tangentially towards the upper surface 30 and a rear passage defining region 24.2 of the body adjacent the outlet 32 also converges tangentially towards the upper surface 30. Hence, the passage 34 also converges towards the outer surface 30. In use, the upper surface 30 of the extractor body 24 is flush with an outer surface 14.1 (shown in figure 1) of the fuselage 14.

The extractor further comprises a flow conditioning arrangement 38 mounted in the passage 34. In the example embodiment, the arrangement comprises at least one wing-shaped body 38 having a head 38.1 and a tail 38.2 and the body is curved from the head to the tail.

The purpose of the flow conditioning arrangement 38 is to accelerate flow in a boundary layer on a rear wall of the extractor, to reduce the difference between the velocity of the ventilation airstream 42 and the external flow velocity and also to fill the velocity profile closest to the surface 14.1 of the fuselage. As shown in figure 4, an additional benefit of the flow conditioning arrangement is that it generates a downward velocity component which reduces the height of the boundary layer behind the extractor. The ventilation airstream 42 in the passage 34 joins the external airstream 44 adjacent the outer surface 14.1 of the fuselage substantially tangentially.

It is believed that with the resulting negative pressure with reference to ambient pressure in the cockpit 1 8, air spilling from the cockpit through the cockpit-canopy junction and the associated negative effects thereof, may be reduced. Furthermore, with the expelled ventilation airstream 42 joining the external airstream 44 substantially tangentially, unwanted separation of a boundary layer downstream of the outlet 32 may be reduced.

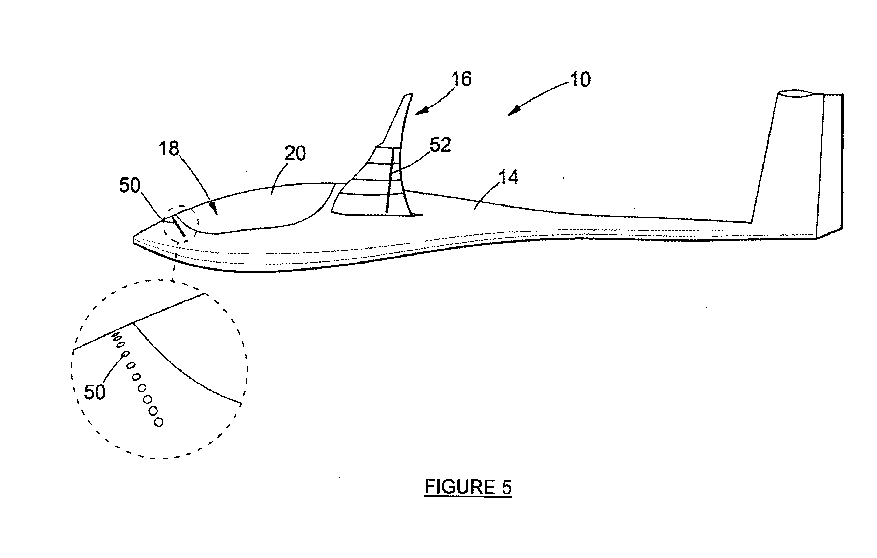

As described hereinbefore, the extractor 22 generates a negative pressure in the cockpit 18 compared to ambient pressure. This negative pressure may be used as a passive suction source for boundary layer suction on other positions on the craft. For example, and as illustrated in figure 5, the negative pressure may be used to apply, through suitable ducting (not shown) boundary layer suction to critical areas on the craft, such as through holes 50 in the nose of the fuselage and/or holes 52 on the main wing, thereby to delay transition of laminar flow to turbulent flow.

It will be appreciated that the craft may, apart from a non pressurized aircraft, such as a light aircraft and glider, be a powerboat, racing car or any other craft, where it is important to expel air from an inner flow field to an outer flow field with limited disturbance of the outer flow field, thereby to inhibit or at least reduce separation of a boundary layer and the resulting drag.

## Claims

1. A craft (10) comprising an elongate fuselage (14), a closed cockpit (18), a lift providing wing (16) comprising a first wing part (16.1) on one side of the fuselage and a second wing part (16.2) on an opposite side of the fuselage and an air extractor (22) for extracting air from the cockpit, the extractor being mounted in an upper region of the fuselage between the first and second wing parts in a region (23) of negative pressure relative to general ambient or atmospheric pressure in use, the extractor (22) comprising a body (24) defining an inlet (28) which is in airflow communication with the cockpit, an outlet (32), a flow passage (34) extending between the inlet and the outlet for an airstream moving from the cockpit to the outlet and an air-flow conditioning arrangement (38) mounted in the passage for conditioning the airstream to inhibit boundary layer separation downstream of the outlet and adjacent the fuselage.

2. A craft as claimed in claim 1 wherein the craft is a glider.

3. A craft as claimed in any one of claims 1 and 2 wherein the passage is trumpet shaped in that the inlet (28) is provided in a region thereof having a larger cross sectional area and wherein the passage narrows towards a throat (36).

4. A craft as claimed in claim 3 wherein the flow conditioning arrangement (38) is provided downstream of the throat (36).

5. A craft as claimed in any one of claims 1 to 4 wherein the flow conditioning arrangement comprises at least one deflector element (38) having a head (38.1) and a tail (38.2).

6. A craft as claimed in claim 5 wherein more than one deflector element are provided and wherein the deflector elements are mounted parallel to one another.

7. A craft as claimed in any one of claims 5 and 6 wherein an angle of the element (38) relative to a main axis of the passage (36) is adjustable.

8. A craft as claimed in any one of claims 1 to 7 comprising ducting leading from the cockpit to holes (50) in regions of the craft, to apply boundary layer suction to the regions, in use.

9. A method of extracting air from a cockpit (18) of a craft (10), the method comprising the steps of:
- utilizing movement of the craft to generate a negative pressure relative to atmospheric pressure in an upper region (23) of a fuselage (14) of the craft between first and second parts of a lift providing wing (16) of the craft;
- utilizing an outlet (32) located in the upper region of the fuselage and which outlet is in communication with the cockpit (18), to cause an airstream (42) to move from the cockpit to the oulet; and
- conditioning the airstream to mitigate separation of a boundary layer downstream of the outlet (32) and adjacent the fuselage (14).

10. A method as claimed in claim 9 comprising the step of causing the airstream (42) moving from the cockpit (18) to join a free airstream (44) adjacent an outer surface (14.1) of the fuselage, substantially tangentially.

11. A method as claimed in claim 10 wherein the airstream (42) moving from the cockpit is caused to join the free airstream (44) substantially tangentially, by deflecting the airstream (42) moving from the cockpit towards the outer surface (14.1) of the fuselage.

12. A method as claimed in any one of claims 9 to 11 wherein the negative pressure in the cockpit is utilized to apply boundary layer suction to any part of the craft.

## Patentansprüche

1. Fahrzeug (10) mit einem langgestreckten Rumpf (14), einem geschlossenen Cockpit (18), einem Auftrieb erzeugenden Flügel (16) mit einem ersten Flügelteil (16.1) auf der einen Seite des Rumpfes und einem zweiten Flügelteil (16.2) auf der gegenüberliegenden Seite des Rumpfes, und mit einem Luft-Extraktor (22) zum Abziehen von Luft aus dem Cockpit, wobei der Extraktor im Einsatz in einem oberen Bereich des Rumpfes zwischen dem ersten und dem zweiten Flügelteil in einer Unterdruckregion (23) relativ zu dem allgemeinen Umgebungsdruck oder Atmosphärendruck angebracht ist, wobei der Extraktor (22) einen Körper (24), der einen Einlass in Luftströmungsverbindung mit dem Cockpit bildet, einen Auslass (32), eine Strömungspassage (34), die sich für einen Luftstrom, der sich von dem Cockpit zu dem Auslass bewegt, zwischen dem Einlass und dem Auslass erstreckt, sowie eine in der Passage angebrachte Luftstromaufbereitungsanordnung (38) zum Aufbereiten des Luftstroms aufweist, um eine Grenzschichtablösung strömungsabwärts von dem Auslass und benachbart dem Rumpf zu unterbinden.

2. Fahrzeug nach Anspruch 1,
wobei das Fahrzeug ein Segelflugzeug ist.

3. Fahrzeug nach einem der Ansprüche 1 und 2,
wobei die Passage derart trompetenförmig ausgebildet ist, dass der Einlass (28) in einer Region derselben mit größerer Querschnittsfläche vorgesehen ist und wobei die Passage in Richtung auf einen Hals (36) enger wird.

4. Fahrzeug nach Anspruch 3,
wobei die Luftstromaufbereitungsanordnung (38) strömungsabwärts von dem Hals (36) vorgesehen ist.

5. Fahrzeug nach einem der Ansprüche 1 bis 4,
wobei die Luftstromaufbereitungsanordnung mindestens ein Ablenkelement (38) mit einem Kopf (38.1) und einem Endteil (38.2) aufweist.

6. Fahrzeug nach Anspruch 5,
wobei mehr als ein Ablenkelement vorgesehen ist und wobei die Ablenkelemente parallel zueinander angebracht sind.

7. Fahrzeug nach einem der Ansprüche 5 und 6,
wobei ein Winkel des Elements (38) relativ zu einer Hauptachse der Passage (36) verstellbar ist.

8. Fahrzeug nach einem der Ansprüche 1 bis 7,
mit einer Kanaleinrichtung, die von dem Cockpit zu Öffnungen (50) in Regionen des Fahrzeugs führt, um im Einsatz eine Grenzschicht-Sogwirkung auf die Regionen auszuüben.

9. Verfahren zum Abziehen von Luft aus einem Cockpit (18) eines Fahrzeugs (10), wobei das Verfahren folgende Schritte aufweist:
- Verwenden der Bewegung des Fahrzeugs zum Erzeugen eines Unterdrucks relativ zum Atmosphärendruck in einer oberen Region (23) eines Rumpfes (14) des Fahrzeugs zwischen einem ersten und einem zweiten Teil eines Auftrieb erzeugenden Flügels (16) des Fahrzeugs;
- Verwenden eines Auslasses (32), der sich in der oberen Region des Rumpfes befindet und der mit dem Cockpit (18) in Verbindung steht, um eine Bewegung eines Luftstroms (42) von dem Cockpit zu dem Auslass zu veranlassen; und
- Aufbereiten des Luftstroms zum Abschwächen der Ablösung einer Grenzschicht strömungsabwärts von dem Auslass (32) sowie benachbart dem Rumpf (14).

10. Verfahren nach Anspruch 9,
das folgenden Schritt beinhaltet: Veranlassen des sich von dem Cockpit (18) weg bewegenden Luftstroms (42), sich mit einem freien Luftstrom (44) benachbart einer Außenfläche (14.1) des Rumpfes im Wesentlichen tangential zu vereinigen.

11. Verfahren nach Anspruch 10,
wobei der sich von dem Cockpit weg bewegende Luftstrom (42) dazu veranlasst wird, sich im Wesentlichen tangential mit dem freien Luftstrom (44) zu vereinigen, indem der sich von dem Cockpit weg bewegende Luftstrom in Richtung auf die Außenfläche (14.1) des Rumpfes abgelenkt wird.

12. Verfahren nach einem der Ansprüche 9 bis 11,
wobei der Unterdruck im Cockpit dazu verwendet wird, eine Grenzschicht-Sogwirkung auf einen beliebigen Teil des Fahrzeugs auszuüben.

## Revendications

1. Aéronef (10) comprenant un fuselage allongé (14), un habitacle fermé (18), une aile à poussée aérostatique (16) dotée d'une première partie d'aile (16.1) sur un côté du fuselage et d'une seconde partie d'aile (16.2) sur un côté opposé du fuselage et un extracteur d'air (22) destiné 0 extraire l'air de l'habitacle, l'extracteur étant monté dans une région supérieure du fuselage entre les première et seconde parties d'aile dans une région (23) de pression négative par rapport à la pression ambiante ou atmosphérique générale, l'extracteur (22) comprenant un corps (24) définissant une entrée (28) qui est en communication d'écoulement d'air avec l'habitacle, une sortie (32), un passage d'écoulement (34) s'étendant entre l'entrée et la sortie et destiné à un flux d'air se déplaçant de l'habitacle vers la sortie et un dispositif de conditionnement de flux d'air (38) monté dans le passage et destiné à conditionner le flux d'air afin d'inhiber la séparation de la couche limite en aval de la sortie et adjacente au fuselage.

2. Aéronef selon la revendication 1, l'aéronef étant un planeur.

3. Aéronef selon l'une quelconque des revendications 1 et 2, dans lequel le passage a une forme de trompette en ce que l'entrée (28) est ménagée dans une région de plus grande section transversale et dans lequel le passage se rétrécit en direction d'un étranglement (36).

4. Aéronef selon la revendication 3, dans lequel le dispositif de conditionnement de flux (38) est prévu en aval de l'étranglement (36).

5. Aéronef selon l'une quelconque des revendications 1 à 4, dans lequel le dispositif de conditionnement de flux comporte au moins un élément déflecteur (38) doté d'une tête (38.1) et d'une queue (38.2).

6. Aéronef selon la revendication 5, dans lequel il est prévu plus d'un élément déflecteur et dans lequel les éléments déflecteurs sont montés parallèlement l'un à l'autre.

7. Aéronef selon l'une quelconque des revendications 5 et 6, dans lequel un angle formé par l'élément (38) par rapport à un axe principal du passage (36) est réglable.

8. Aéronef selon l'une quelconque des revendications 1 à 7 comprenant un conduit allant de l'habitacle à des trous (50) ménagés dans des régions de l'aéronef, en vue de générer en utilisation une aspiration de couche limite vers les régions.

9. Procédé d'extraction d'air d'un habitacle (18) d'un aéronef (10), le procédé comportant les étapes consistant à :
- utiliser le mouvement de l'aéronef pour générer une pression négative par rapport à la pression atmosphérique dans une région supérieure (23) d'un fuselage (14) de l'aéronef entre des première et seconde parties d'une aile à pression aérostatique (16) de l'aéronef ;
- utiliser une sortie (32) située dans la région supérieure du fuselage, laquelle sortie est en communication avec l'habitacle (18), pour amener un flux d'air (42) de l'habitacle à la sortie ; et
- conditionner le flux d'air afin d'atténuer la séparation d'une couche limite en aval de la sortie (32) et adjacente du fuselage (14).

10. Procédé selon la revendication 9 comprenant l'étape consistant à amener le flux d'air (42) se déplaçant depuis l'habitacle (18) à rejoindre un flux d'air libre (44) adjacent à une surface externe (14.1) du fuselage, de façon sensiblement tangentielle.

11. Procédé selon la revendication 10, dans lequel le flux d'air (42) depuis l'habitacle est amené à rejoindre le flux d'air libre (44) de façon sensiblement tangentielle, par déflection du flux d'air (42) se déplaçant de l'habitacle vers la surface externe (14.1) du fuselage.

12. Procédé selon l'une quelconque des revendications 9 à 11, dans lequel la pression négative dans l'habitacle est utilisée pour générer une aspiration de couche limite en n'importe quelle partie de l'aéronef.
